# EUROPEAN PATENT APPLICATION

(11) **EP 1 033 850 A2**
(43) Date of publication of application: **06.09.2000**
(21) Application number: 00103478.4
(22) Date of filing: 01.03.2000
(51) Int. Cl.: H04L 12/64, H04L 29/06, H04Q 7/38, H04Q 7/32

(54) **Data communicating terminal**

(30) Priority: 01.03.1999 JP 5303499
(71) Applicant: KABUSHIKI KAISHA TOSHIBA, Kawasaki-shi, Kanagawa 210-8520 (JP)
(72) Inventor: Hara, Kenji, 1-1 Shibaura 1-chome Minato-ku Tokyo 105 (JP); Ogasawara, Hiroshi, 1-1 Shibaura 1-chome Minato-ku Tokyo 105 (JP); Omura, Taro, 1-1 Shibaura 1-chome Minato-ku Tokyo 105 (JP); Nannichi, Toshihiko, 1-1 Shibaura 1-chome Minato-ku Tokyo 105 (JP)
(74) Representative: HOFFMANN - EITLE

(57) **Abstract**

A data communicating terminal (11) is connected to an information providing server (15) by a packet switching method and the information page obtained from the information providing server (15) is displayed on a display section. The information page obtained from the information providing server (15) includes the information such as text-based web page. Once a link to multi-media data is selected, the connection of the data communicating terminal (11) to the presently using packet switching network (13) is disconnected. Then, the data communicating terminal (11) is newly connected to channels by a channel switching method and reconnected to an MMS server via a channel switching network (14). Channel connections are thus dynamically switched between the packet switching connection and channel switching connection. It is, therefore, possible to efficiently obtain various types of contents such as multi-media data, text-based information and the like.

## Description

The present invention relates to a mobile station or data communicating terminal apparatus for the use with communication system such as a mobile communication system, and more particularly to a mobile station or data communicating apparatus capable of acquiring content data such as text, moving picture and audio data from a network.

Recently, due to technical development in a digital mobile telephone or digital cellular phone, a digital mobile communication using a digital mobile telephone or digital cellular phone has been widely used. Among other things, a communication system using a wideband-code division multiplex access (W-CDMA) with high channel speed of 2 Mbps at maximum enables communication of a large capacity of multi-media data such as moving picture or audio data. It is, therefore, required to configure a system capable of efficiently receiving services to provide content utilizing an internet even from mobile communication terminals such as a digital cellular phone.

At present, in an Internet system, it is possible to obtain content on a server through a network by using a browser at terminals such as a personal computer and display an image on a display and reproduce audio data from a speaker. Content on a server comprises a multi-media content and information content such as text. In this system, multi-media content means stream data such as moving picture, audio data or the like while information content means text, still picture or the like. The foregoing contents are obtained by a browser through a protocol (e.g. HTTP: Hyper Text Transfer Protocol) which is of a request and response system. In this case, generally only one specific channel to connect to an internet is always used to obtain information from a server not depending on the type of content to be acquired.

Since a digital mobile communication system often transmits and receives relatively small capacity of data when having access to a world wide web (WWW) mainly comprising text data, a network connection is suited to conduct digital mobile communication via packet switching connection or service where charges are imposed according to communication data volume. However, if a conventional service system where only a specific channel continues to be used is applied to obtain content by a digital mobile communication system, packet switching connection communication in obtaining any type of content continues unless the communication connected from a digital cellular phone to an internet system by packet switching connection is disconnected.

As described above, the packet switching connection is effective as a channel connection wherein communication data are small in quantity, but it is regarded inappropriate for distributing the voluminous and synchronous data since there raises problems such as packet delay and packet order changing. Thus, the packet switching connection is not necessarily suitable for distributing multi-media content. While, the use of a channel switching connection enables the voluminous data to be stably distributed, but there raises such a problem that communication charges becomes higher since charges are imposed on users even during the time when communication for transmitting and receiving data is not conducted.

It is an object of the present invention to provide a data communicating terminal apparatus capable of data communication suitable for obtaining content via digital mobile communication by efficiently and stably receiving various types of contents on a network while reducing communication cost.

The present invention provides a data communicating terminal apparatus capable of obtaining content data on a network comprising communication control means for controlling connection to the network and control means for switching the channel for network connection or a connection to the channel.

This data communicating terminal apparatus dynamically switches methods of obtaining content data depending on the types of content such as text data and multi-media data. For example, if a second channel is more suitable for the multi-media data than a first channel, control for switching channel connections is carried out in such a manner that a content request is made in the first channel and the content is obtained in the second channel. Also, control for switching channel connections is conducted in such a way that packet switching connection is used for obtaining the text data while channel switching connection is for multi-media data. The switching of channels or channel connections as described above enables not only selection of the data communication optimum for content to be obtained but also the efficient and stable acquisition of various types of contents on a network while reducing communication cost.

Also, if switching of the channels or connections is carried out, a charging configuration, channel usage charges (charged or free), a position of access point to be used for a new channel connection, and the like may be dynamically changed. It is thus preferable that restriction control as to whether or not to switch channels or channel connections is conducted using called party numbers informed by a server. This prevents troubles such as an unexpected request for payment of communication charges and the like even if configuration for dynamically conducting switching of channels or channel connections is incorporated.

In addition, it is possible to eliminate useless communications by restricting communications based on performances of mobile stations and validity term of the content.

Furthermore, in a data communicating terminal apparatus with a multi-call function capable of simultaneous connection of a plurality of channels, it is preferable that not only the presently using channel is disconnected and then reconnected to a new channel but a new channel connection is conducted with the present channel connection unchanged. This eliminates the need to disconnect the presently using channel and enables reduction of the time required for obtaining content by conducting new channel connection. Also, if content to be obtained is switched again from the multi-media data to the text data, it is possible to promptly obtain the content by using the original channel to which connection is maintained.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an entire system configuration using a data communicating terminal according to an embodiment of the present invention.
FIG. 2 is a block diagram showing a configuration of the data communicating terminal shown in FIG. 1.
FIG. 3 is a diagram showing a communication protocol used in the data communicating terminal shown in FIG. 1.
FIG. 4 is an illustration showing operation by browser and plug-in used in the data communicating terminal shown in FIG. 1.

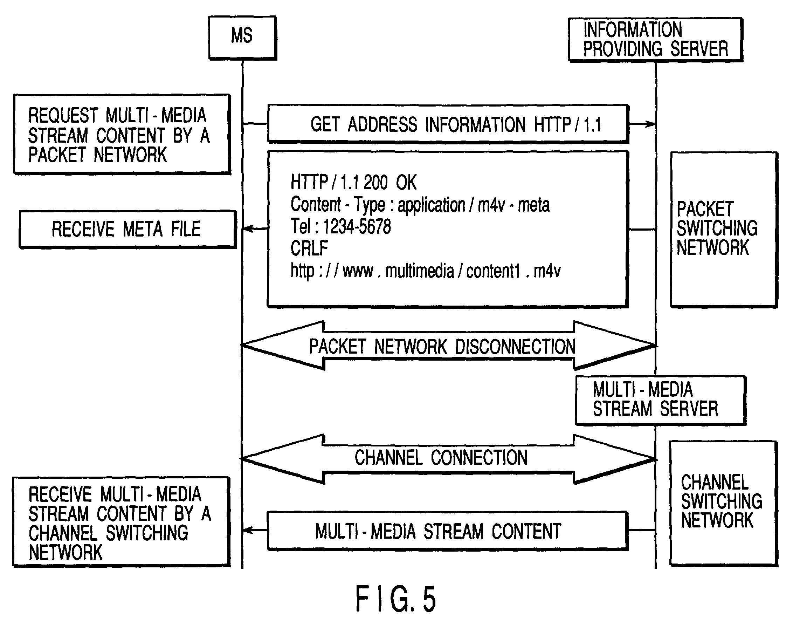

FIG. 5 is an illustration showing a flow of process for obtaining content by a meta file method used in the data communicating terminal shown in FIG. 1.
FIG. 6 is a flowchart showing a first example in which content is obtained by using the meta file method in FIG. 5.
FIG. 7 is a flowchart showing a second example in which content is obtained by using the meta file method in FIG. 5.
FIG. 8 is a flowchart showing a third example in which content is obtained by using the meta file method in FIG. 5.
FIG. 9 is a flowchart showing a fourth example in which content is obtained by using the meta file method in FIG. 5.
FIG. 10 is a flowchart showing a fifth example in which content is obtained by using the meta file method in FIG. 5.
FIG. 11 is a flowchart showing a sixth example in which content is obtained by using the meta file method in FIG. 5.
FIG. 12 is a flowchart showing a seventh example in which content is obtained by using the meta file method in FIG. 5.
FIG. 13 is a flowchart showing an eighth example in which content is obtained by using the meta file method in FIG. 5.
FIG. 14 is an illustration showing a flow of process for obtaining content by a response header extension method used in the data communicating terminal shown in FIG. 1.
FIG. 15 is a flowchart showing a first example in which content is obtained by using the response header extension method in FIG. 14.
FIG. 16 is an illustration showing a flow of process for obtaining content by a scheme extension method used in the data communicating terminal shown in FIG. 1.
FIG. 17 is a flowchart showing a first example in which content is obtained by using the scheme extension method in FIG. 16.
FIG. 18 is a flowchart showing a second example in which content is obtained by using the scheme extension method in FIG. 16.
FIG. 19 is a flowchart showing a content acquisition procedure of switching the best effort type packet communication to the QoS guaranteed type communication in accordance with an embodiment of the invention.

A description will be given to a network system using a data communicating terminal in an embodiment of the present invention in reference to drawings below.

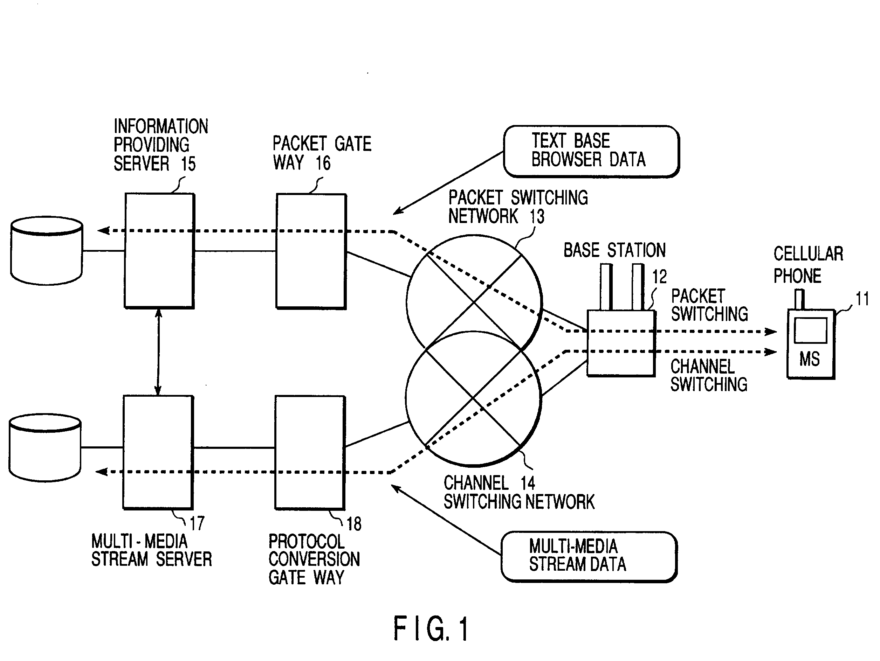

FIG. 1 shows an entire network system using a data communicating terminal in an embodiment of the present invention. Data communicating terminals 11 are mobile stations (MS) such as a cellular phone capable of obtaining various types of contents on networks such as an Internet. This mobile station (MS) 11 achieves communication with the speed of 2 Mbps at maximum by a W-CDMA communicating method.

Content to be provided to the mobile station 11 by the W-CDMA method has two types consisting of a multi-media stream (MMS) content and information content. The multi-media stream (MMS) content herein means the data compressed like moving picture data including video data compressed according to the standards such as MPEG-4 Standard or the data which are voluminous in data such as simply coded audio data and which are continued in time series while the information content means contents comprising text-based character data or the data which are relatively smaller in quantity than a multi-media stream information and which are relatively discontinued in time series.

A system shown in FIG. 1 is provided with an information providing server 15 for providing information in information content of a text stream on a network and multi-media stream server (MMS server) 17 for providing multi-media stream (MMS) content. The information providing server 15 is connected to a packet switching network 13 via a packet gate way unit 16 and the MMS server 17 is connected to a channel switching network 14 via a protocol gate way unit 18 to convert the predetermined protocol.

However, the information such as terminal access control information for example is exchanged between the information providing server 15 and the MMS server 17 which are used by combining each other. It is, therefore, possible to promptly obtain the multi-media content from the multi-media server 17 on the same terminal using text information provided by the information providing server 15 by changing switching networks as described hereinafter below.

The mobile station 11 can be connected to any of the packet switching network 13 and the channel switching network 14 via a base station 12, and it is thus possible to carry out the data communication with the information providing server 15 and the MMS server 17 using the packet switching network 13 and the channel switching network 14.

The mobile station 11 and the information providing server 15 may not be connected sequentially in time series, therefore data communication therebetween may be carried out sporadically for which a packet switching method is employed. That is, in the case where information content is obtained from the information providing server 15, the mobile station 11 is connected to the packet switching network 13 via packet switching connection and communicated with the information providing server 15 via the packet switching network 13.

While, communication between the mobile station 11 and the MMS server 17 is carried out by channel switching methods such as a non-restricted digital bearer. That is, in the case where the MMS content is obtained from MMS server 17, the mobile station 11 is connected to the channel switching network 14 by channel switching connection and communicated with the MMS server 17 via the channel switching network 14.

A basic flow when a user of the mobile station 11 views the MMS content will be described.
(1) The mobile station is connected to the information server 15 by packet switching connection and the information page obtained from the information providing server 15 is displayed on a liquid crystal display (LCD) of the mobile station 11. The information page obtained from the information providing server 15 is like text-based web page comprising a hypertext (hyper media) information described by HTML.
(2) Reference (a reference pointer) to other contents to which a mobile station is linked is incorporated in the information page. The reference pointer is described by a uniform resource locator (URL) and the content resource concerned, i.e. the information which indicates the location of the content is given therein. Some contents to which a mobile station is linked are in the information providing server 15 and some in the MMS server 17.
(3) If an user of the mobile station 11 selects content i.e. the MSS content in the MMS server 17, the mobile station 11 is connected to a new channel by channel switching connection and connected to the MMS server 17 via the channel switching network 14 after disconnecting the presently using packet switching network 13.

Thus, according to an embodiment of the present invention, if the intended content to be obtained from a network is the MSS content, the content is reconnected to the network by channel switching connection. This enables the MMS content to be stably obtained via the channel switching network 14. However, even if the same type of packet switching connections or the same type of channel switching connections are conducted, there may be a plurality of channels whose speed and quality are different. This enables good efficient acquisition of content by switching channels to be actually used for connection depending on the type of content even in the same channel connections. In addition, since different types of channels for each a channel connection are generally often used, switching of channel connections is in many cases carried out with respect to switching of a channel to be used. Channel switching is controlled so that a channel to be used and at least either of connections to the channel may be switched.

Also, only the base station 12 is shown in FIG. 1, but it is evident that this base station 12 is replaced by other base stations as the mobile station 11 is moved, and it is thus requested to be understood that the base station 12 in FIG. 1 represents one of the base stations.

Furthermore, FIG. 1 shows logical connection relationships. For example, the information providing server 15 and the MMS server 17 are not necessarily required to be located in physically different positions and thus, there may be a server capable of connecting to any of the packet switching network 13 and the channel switching network 14.

In this embodiment, an example in which a mobile station and server are connected by a W-CDMA method has been described, but there may be of course no problem in using a wire channel.

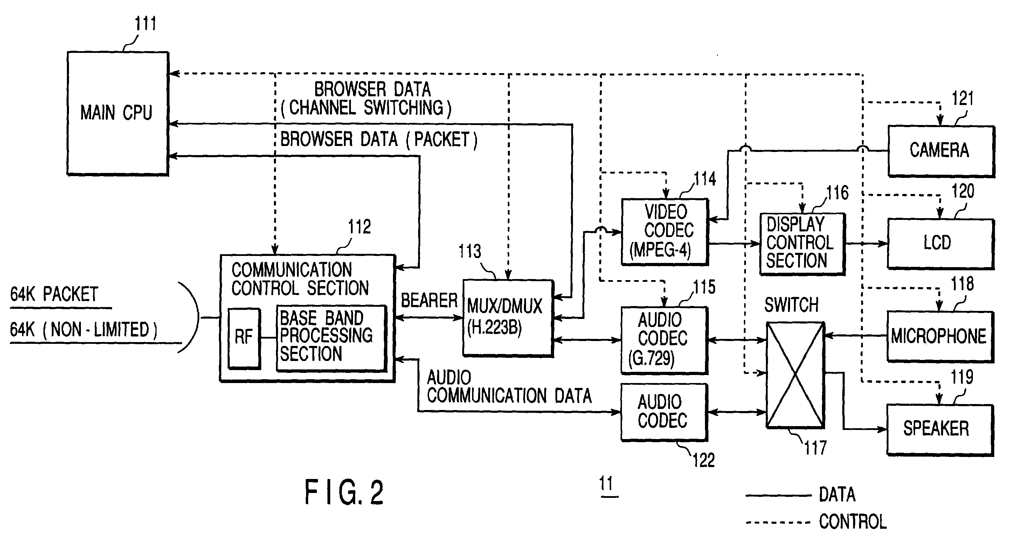

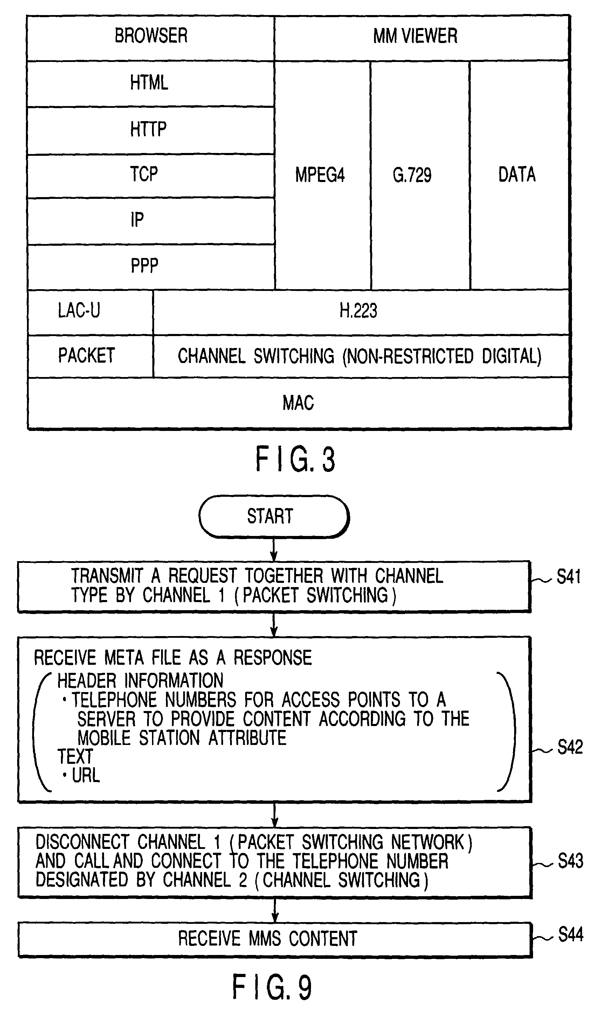

Next, a mobile station configuration shown in FIG. 1 will be described in reference to FIGS. 2 and 3.

FIG. 2 shows an example of the specific configuration of the mobile station 11. This mobile station 11 has a color LCD and the camera built in a main body which is of an usual cellular phone shape, which can conduct data communication, TV telephoning and the like for acquiring and displaying content by a browser in addition to usual audio communication. As shown in FIG. 2, this mobile station 11 comprises a main CPU 111, a communication control section 112, MUX/DMUX section 113, a video codec 114, an audio codec 115, a display control section 116, a switch 117, a microphone 118, a speaker 119, a color LCD 120, a camera 121, an audio codec 121 and the like.

The main CPU 111 is of a built-in processor for control operation of each unit in the mobile station 11 and enables processing of audio communication, data communication, TV telephoning and the like by executing a control program. A protocol and the like with regard to request, acquisition and display of content are processed by browser program carried out by the main CPU 111 at the time of data communication, i.e. in the data communication mode. As evident from the protocol structure shown in FIG. 3, the browser program is adaptable to both methods for packet switching and channel switching. In both cases where the browser program is connected to a server by packet switching and channel switching connections, it is possible by this browser program to carry out the data communication between a server to which the browser program is connected and mobile station. Also, processing of multi-media data such as moving picture and audio data is achieved by an independent program module (MM viewer and the like) separated from the browser main body.

The communication control section 112 is provided with a radio frequency channel section (RF) and base band processing section wherein network connection is controlled, and transmitted and received signals are modulated and demodulated. At the time of data communication, calling and connection for network connection are conducted by the communication control section 112 responsive to the request from the browser program.

This communication control section 112 is provided with connection control procedures for the packet switching connection and channel switching connections and can switch by the main CPU 111 the connection control procedures to be used. If network connection is conducted by packet switching connection, the data communication is carried out by a packet switching method of e.g. 64 Kbps, and if network connection is conducted by a channel switching method, the data communication is effected by channel switching methods such as non-restricted digital bearer of e.g. 64 Kbps and the like.

The information content such as browser data obtained by the packet switching method is transmitted from the communication control section 112 to the main CPU 111 and processed therein. On the other hand, multiplex streams (bearer data) in the MMS content acquired by the channel switching method are transmitted from the communication control section 112 to the MUX/DMUX section 113 and separated into control data such as browser data, moving picture data based on the MPEG-4 Standard and audio data therein. The control data such as browser data are transmitted to the main CPU 111, and moving picture data based on the MPEG-4 Standard and audio data are transmitted to the video codec 114 and the audio codec 115 and demodulated therein.

The channel switching method is used for obtaining content for TV telephoning, the received data are processed by the same manner as for the MMS content. Also, the moving picture data such as a face of the user taken by the camera 121 and audio data input from the microphone 118 are coded by the video codec 114 and audio codec 115 respectively and are multiplexed by the MUX/DMUX 113 and transmitted thereafter.

The display control section 116 controls the color LCD 120 by the main CPU 111 and displays information content such as browser data, and various types of information such as moving pictures and still pictures on the LCD. The information content such as browser data is displayed in the same manner as in usual personal computers.

For example, character color for a reference pointer is changed as in the usual hyper text or displayed with its underlines with respect to the browser data including the reference pointer to the MMS content. In the foregoing process, the MSS content required for additional charges at the time of data acquisition is specified by the main CPU 111 based on the information and the like transmitted together with the browser data and is displayed with a specific color and its charge amount. In addition, if a mobile station is connected to the content which is charged each time the mobile station obtains the content or additionally charged each time certain operation is conducted, the followings will be conducted; the accumulated charge amount is displayed on a portion of the display, and indicated to the user; each time the charge exceeds certain amount, the exceeded amount is pop-up displayed on a display; or the communication control section 112 is controlled by the CPU 111 so that the charge timing may be informed to users. Provided below are methods for charge timing: (1) Indicate the time left for the next charging; (2) Inform to users by vibration of a vibrator and the like which is conducted each time charges are imposed on users; and (3) confirm with users as to whether or not connection should be stopped each time charges are imposed on users.

The switch 117 is a switching circuit to change a processing path using the usual audio communication data and audio data with which data communication is carried out as the MMS content. The switch 117 is maintained in a conversation mode while the switch 117 is being connected to the audio codec 121, and the switch 117 is maintained in a data communication mode while the switch 117 is being connected to audio codec 115.

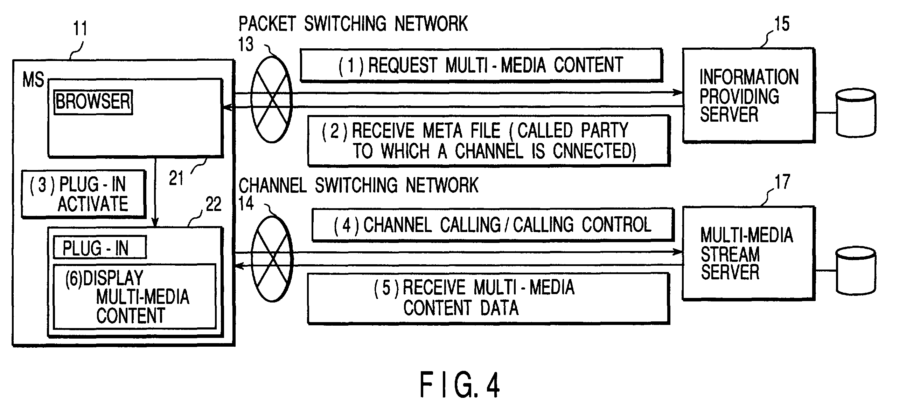

Next, a basic procedure in which a browser executes on the mobile station 11 for acquiring content on a network will be described in reference to FIG. 4.

As described above, content has two types, i.e. information content and MMS content. The cases in which both contents are requested by user via a mobile station, respectively, will be described.

With regard to a protocol for the request/response required for obtaining content, a sequence in the case where HTTP is used will be described below.

Information content is acquired by a request made via the packet switching network 13. In the process described above, it is possible to make a request of content to which a mobile station is linked by URL beginning with http:// in the same manner as in an Internet.

As previously described, in the case of obtaining the MMS content, the MMS content is requested via the packet switching network 13, and control to obtain the MMS content via the channel switching circuit 14 is carried out. In this case, the following methods may be employed as a request method:
(a) Meta data file method
(b) Response header extension method
(c) Scheme extension method

Procedures using a meta file method, a response header method and scheme extension method will be described.

### (Meta file method)

In a meta tile method, a resource (URL) for MMS content is not directly described in a HTML file constituting information content but an intermediate data file (meta data file) in which the resource for the MMS content is described is prepared and thus, the URL indicating the meta file address is described in the HTML file. When a browser makes a request of the MMS content, the meta file is returned as a response. The meta file in an internet is used for achieving technology for reproducing the streaming by downloading moving pictures and audio data. According to this embodiment, control for switching channels or channel connections is carried out using this meta file method.

Firstly, request and/or response procedures for the MMS content which are used while switching a packet switching network and channel switching network will be described in reference to FIGS. 3 and 4.
(1) Using the address information (URL) to a meta file incorporated in a HTML file, the browser 21 for the mobile station 11 transmits the meta file request responsive to the intended MMS content to the information providing server 15.
   GET Address information HTTP/1.1

   This request is transmitted to the information providing server 15 via the packet switching network 13. However, the method "GET" is to request the server 15 to extract the content to be identified by the address information given as a subtracting number.
(2) The browser 21 receives a meta file as a response via the packet switching network 13.
   The HTTP response comprises a header and body. The header includes the content information and the body includes content itself. The portion as far as CRLF in the response forms a header. Also, since the meta file corresponds to content, the meta file information is included in the HTTP header and the meta file content is included in the body.
   HTTP/1.1 200 OK
   Content-Type: application/m4v-meta
   Tel: 1234-5678
   CRLF
   http://www.multimedia/content1.m4v

   In the header, HTTP/1.1 means the used protocol; 200 means a status code meaning OK, and OK means a sentence expressing the reason. The meta file for handling the MSS content is indicated in the subsequent "Content-Type: application/m4v-meta", and "Tel: 1234-5678" means a called party number for reconnection by channel connection, i.e. the telephone number (called party number) of the access point or the server itself to make PPP connection by switching connection to the multi-media stream server 13. The meta file text "http://www.multimedia/content1.m4v" means URL indicating the location of the intended MSS content.
(3) The browser 21 having received a meta file activates a plug-in 22 and delivers the called number and URL included in the received meta file to the plug-in 22.
(4) After connection of the mobile station 11 to the packet switching network 13 is cut by the communication control section 112, the mobile station 11 requests a called party designated by its telephone number to process calling. This connects the mobile station 11 to the channel switching network 14.
(5) The plug-in 22 makes a request of content based on the URL received from the browser 21 and receives the MMS content from the multi-media stream server 17.
(6) Then, the MMS content is displayed by the plug-in 22.

However, designation of the called party number is not necessarily required and thus, only the information to the effect that the channel connection is switched to the channel switching connection may be transmitted to the meta file. In this case, it is possible to call the access point for the channel switching network connection by registering called party numbers of for the channel switching connection in the mobile station 11 in advance. Also, it becomes unnecessary to include the URL for MMS content in the meta file text when the MMS content address is informed from the information providing server 15 to the MMS server 17 or when the information providing server 15 and the MMS server 17 are functioned as an identical server by combining the information providing server 15 with the MMS server 17.

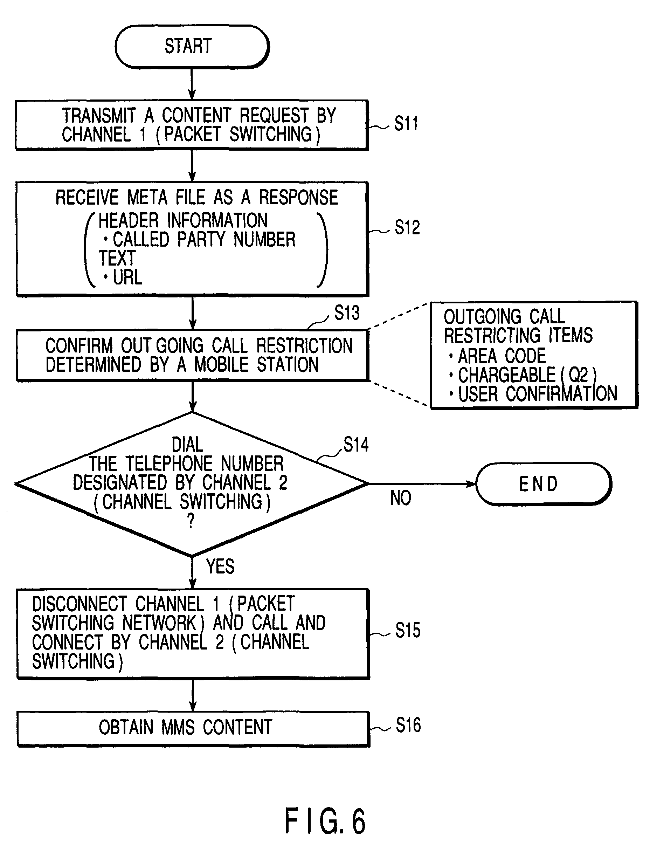

Next, a flow of process conducted by the mobile station 11 using the meta file method will be described in reference to flowcharts shown in FIGS. 6 to 13.

A flowchart in FIG. 6 shows an example in which control is carried out to restrict a calling process for channel switching using a called party number.

That is, the main CPU 111 of the mobile station 11 firstly transmits a request of the intended MMS content to the information providing server 15 via the presently using channel 1 (packet switching network) (Step S11), and receives the meta file as a response (Step S12). As described above, the called party numbers and URL for the MMS content are included in the meta file.

The main CPU 111 judges as to whether or not to carry out automatic calling for connecting to a new channel 2 (channel switching network) designated by a called party number by checking the telephone number with the outgoing call restriction regulation information registered in advance by a user of the mobile station 11 (Step S13 and Step S14).

Enumerated as outgoing call restriction items to be restricted by the outgoing call restriction regulation information are user identification information to determine whether or not it is always necessary to indicate and identify telephone numbers of called parties to users in addition to the outgoing call inhibiting area code information designating the inhibition of the outgoing call to an area code and outgoing call inhibiting chargeable channel information which inhibits outgoing call to chargeable channels such as the international telephone service, Dial Q2 (trade mark) and the like. If a called party number is applied to the number restricted by the outgoing call inhibiting area code information or outgoing call inhibiting chargeable channel information, the connection to a new channel 2 (channel switching network) designated by the called party number is stopped. Also, if the user identification information is effective, the called party number is indicated to a user to inquire whether or not to make connection even if the called party number is not applied to the number restricted by the outgoing call inhibiting area code information or outgoing call inhibiting chargeable channel information. Furthermore, provided is the information to control permission or inhibition in acquiring content for adults as the outgoing call restriction regulation information. It is also possible to prevent a terminal provided by a company for business or terminal used by children from being used for acquiring undesirable content by checking the information with the content type information indicated by a server associated with the content.

When the called party number is not applied to the number restricted by the outgoing call inhibiting area code information or the outgoing call inhibiting chargeable channel information, or when a calling is permitted by a user, the main CPU 111 carries out calling and connection to a channel 2 (channel switching network) using the called party number after controlling the communication control section 112 to disconnect a channel 1 (packet switching network) (Step S15). Then, the main CPU 111 accesses the MMS server 17 via the channel 2 (channel switching network) using URL for the MMS content provided by a meta file and receives the MMS content from the channel 2 (channel switching network), displaying the content on a display thereafter (Step 16).

This prevents the unexpected request for payment of communication charges by restricting the calling using called party numbers.

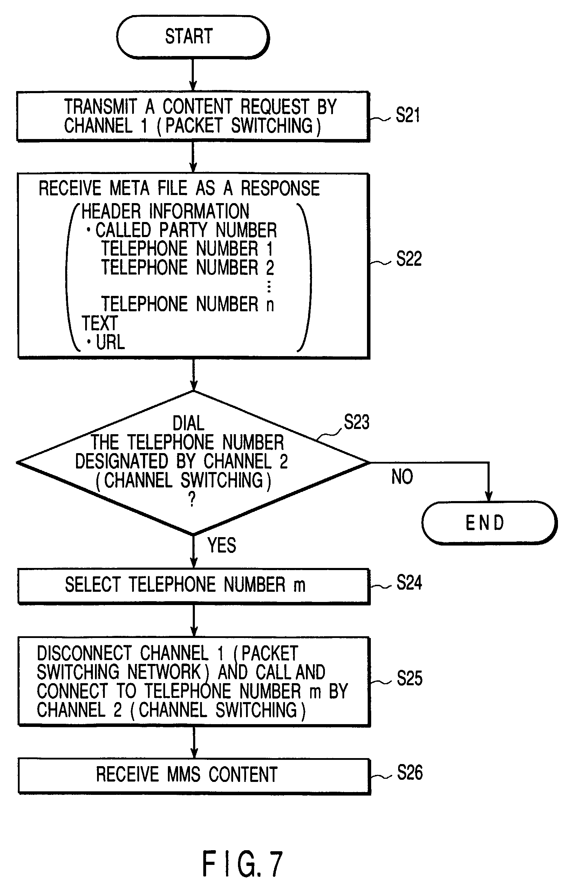

A flowchart shown in FIG. 7 is an example in which control for calling restriction is effective when there are a plurality of called party numbers.

That is, the main CPU 111 of the mobile station 11 transmits a request for the intended MMS content to the information providing server 15 via the presently using channel 1 (packet switching network) (Step S21) and receives a meta file as a response (Step S22). If there are a plurality of access points for channel switching connection to the MMS server 17, each telephone number for these access points is included in the meta file as a called party number.

In this case, the main CPU 111 indicates all these called party numbers (1-n) to users to inquire whether or not to carry out calling (Step S23) and makes the users to select a called party number when calling (Step S24). It is of course possible to automatically select the called party number at access point closest to the present location of the mobile station 11. For example, the information on the present location of the mobile station 11 can be obtained from a server.

When the called party number (m) is selected, the main CPU 111 controls the communication control section 112 and disconnect the channel 1 (packet switching network). Thereafter, calling and connection to the channel 2 (channel switching network) is conducted by using a called party number (m) (Step S25). Furthermore, the main CPU 111 accesses the MMS server 17 via the channel 2 (channel switching network) using URL for the MMS content provided by the meta file and receives the MMS content from the channel 2 (channel switching network) to display the content on a display (Step S26).

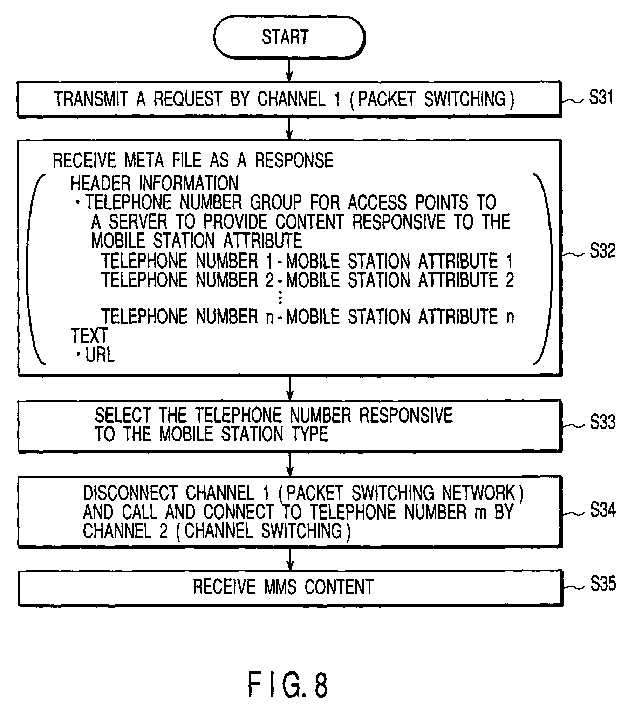

A flowchart in FIG. 8 shows an example in which the channel numbers meeting the performance of the mobile station 11 are automatically selected when there are a plurality of called party numbers.

That is, the main CPU 111 of the mobile station 11 transmits a request for the intended MMS content to the information providing server 15 via the presently using channel 1 (packet switching network) (Step S31) and receives a meta file as a response (Step S32). If there are a plurality of access points for channel switching connection to the MMS server 17, each telephone number (1-n) for these access points and a terminal attribute required for receiving services provided in the channel to which the mobile station is connected by the telephone numbers are informed to the MMS server 17 by the meta file. Information on an attribute of the mobile station may be, for example, channel speed and information on connection mode for the channel connection (information on the area to which the channel is connected, channel quality, charge information and the like). Also, if MMS content service examples are different per channel, a screen size of the mobile station, color number, frame rate and the like can be used as attribute information of the mobile station. In addition, the quality of services to be provided by the channel concerned and charge information per each channel (for example, charges and quality are both high, and charges are not high but quality is low) can be added.

The main CPU 111 selects a telephone number (m) with the mobile station attribute meeting the performance of the mobile station 11 (Step S33). It is assumed that the telephone number (m) for connecting the mobile station via the channel 2 (channel switching network) is selected. However, if the quality of services provided by the channel and charge information are added to the MMS content, the information may be indicated to users and selected by the users.

Thereafter, the main CPU 111 controls the communication control section 112 and carries out calling and connection to the channel 2 (channel switching network) using a called party number (m) after disconnecting the channel 1 (packet switching network) (Step S34). Furthermore, the main CPU 111 accesses the MMS server 17 via the channel 2 (channel switching network) using URL for the MMS content provided by the meta file and receives the MMS content from the channel 2 (channel switching network) to display the content on a display (Step S35).

As described above, it is possible to obtain the MMS content via a suitable channel by automatically controlling a called party based on the performance of the mobile station (attribute of the mobile station) and to receive the MMS content providing services meeting the performance of the mobile station.

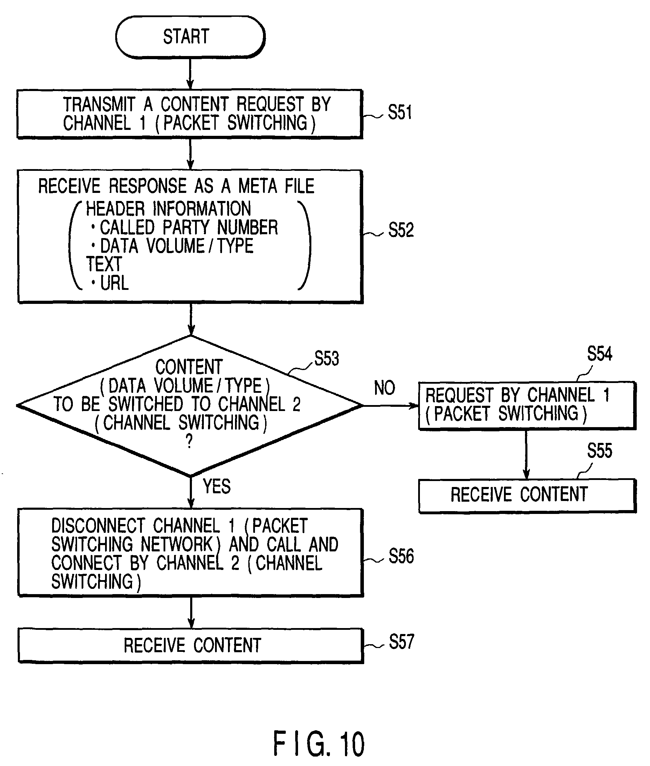

A flowchart shown in FIG. 9 is an example in which the channel numbers meeting the performance of the mobile station 11 which has made a request are informed to the mobile station 11 from a server if there are a plurality of called party numbers.

That is, the main CPU 111 of the mobile station 11 transmits a request for the intended MMS content together with information on type (performance) of the mobile station 11 to the information providing server 15 via the presently using channel 1 (packet switching network) (Step S41) and receives a meta file as a response (Step S42). If there are a plurality of access points for channel switching connection to the MMS server 17, telephone numbers for access points to the server for providing services meeting the type (performance) of the mobile station 11 which has made a request out of respective telephone numbers (1-n) for the access points are informed to the MMS server 17 by the meta file.

The main CPU 111 controls the communication control section 112 and carries out calling and connection to the channel 2 (channel switching network) using the called party number (m) designated by the meta file after disconnecting the channel 1 (packet switching network) (Step S43). Furthermore, the main CPU 111 accesses the MMS server 17 via the channel 2 (channel switching network) using URL for the MMS content provided by the meta file and receives the MMS content from the channel 2 (channel switching network) to display the content on a display (Step S44).

It is thus possible to receive the MSS content providing services meeting the mobile station performance by automatically selecting a called party number adaptable to the performance of the mobile station (attribute of the mobile station) at a server side and transmitting the selected numbers to the mobile station 11. It is also possible to restrict the providing of the content to the mobile station by judging at the server side whether or not the mobile station can provide content according to the performance or attribute of the mobile station. In this case, the performance of the mobile station may also be transmitted to the server at the time of calling for a new channel connection.

A flowchart shown in FIG. 10 is an example in which whether or not to switch channels or channel connection modes according to the volume and type of the content data for which request is made is determined at the mobile station side if it is possible to obtain the intended content from either the presently using channel or other channels.

That is, the main CPU 111 of the mobile station 11 firstly transmits a request for the intended content to information providing server 15 via the presently using channel 1 (packet switching network) (Step S51) and receives a meta file as a response (Step S52). The meta file includes the information on the volume and type of the content data in addition to the called party number and URL for the content for which a request has been made.

Based on the data volume or content type provided by the meta file, the main CPU 111 determines whether the present channel 1 (packet switching) continues to be used or is switched to a new channel (Step S53). It is of course permitted to indicate the data volume or content type provided by the meta file to users to have the users select the content data.

For example, if the data content is relatively small in quantity with regard to the multi-media data, the main CPU 111 obtains content from the channel 1 (packet switching network) without switching channels by accessing the information providing server 15 via the channel 1 (packet switching network) using URL for the MSS content provided by the meta file (Step S54 and Step S55).

While, with respect to the multi-media data whose volume is great, the main CPU 111 carries out calling and connection to the channel 2 (channel switching network) using the called party number designated by the meta file after disconnecting the channel 1 (packet switching network) (Step S56). Then, the main CPU 111 accesses the MSS server 17 via the channel 2 (channel switching network) using URL for the MSS content provided by the meta file and receives the MSS content from the channel 2 (channel switching network) to display the content on a display (Step S57).

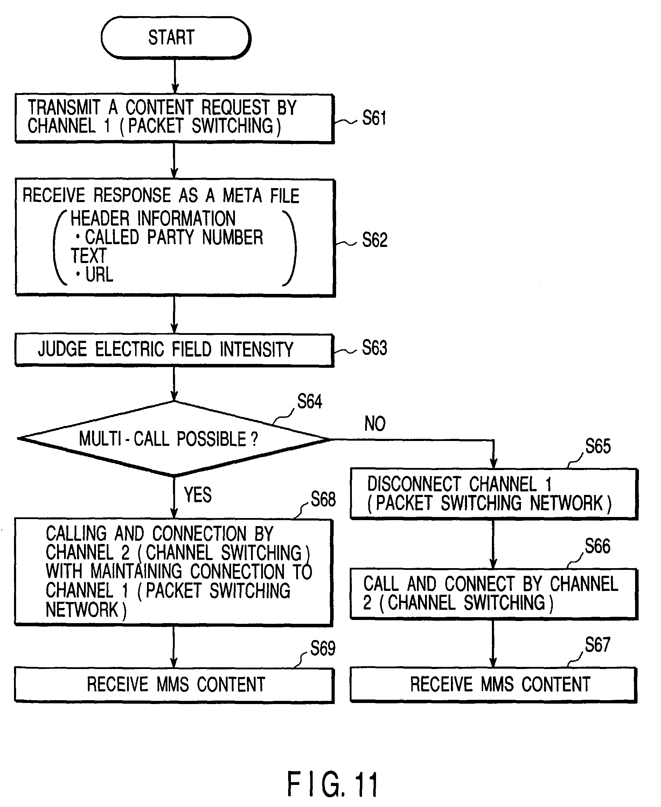

A flowchart shown in FIG. 11 is an example in which the mobile station 11 has a multi-call function enabling simultaneous connection to a plurality of channels. The multi-call function can be used by the mobile station using a W-CDMA method.

That is, the main CPU 111 of the mobile station 11 firstly transmits a request for the intended content to the information providing server 15 via the presently using channel 1 (packet switching network) (Step S61) and receives a meta file as a response (Step S62). The meta file includes the called party number and URL for the content for which a request has been made.

Then, the main CPU 111 checks the electric field intensity and judges whether the channel is in such a radio environment that it is possible to use a multi-call function (Step S63 and Step S64). That is, when connecting a mobile station to a plurality of channels by a multi-call method, a plurality of frequencies are output simultaneously so that the maximum amplitude of the synthetic output becomes doubled the usual one. If the mobile station 11 is located relatively close to the base station 12, there raises no problem even if the maximum amplitude of the synthetic output increases by a multi-call function since the output from the mobile station 11 is reduced by an instruction from the base station 12. However, the multi-call function cannot be applied at the location far away from the base station 12 since the synthetic output is saturated.

If it is not possible to use a multi-call function, the main CPU 111 carries out calling and connection to the channel 2 (channel switching network) using the called party number designated by the meta file after disconnecting the presently using channel 1 (packet switching network) (Step S65 and Step S66). Then, the main CPU 111 accesses the MSS server 17 via the channel 2 (channel switching network) using URL for the MSS content provided by the meta file and receives the MSS content from the channel 2 (channel switching network) to display the content on a display (Step S67).

On the other hand, if it is possible to use the multi-call function, the main CPU 111 carries out calling and connection to the channel 2 (channel switching network) using the called party number designated by the meta file while maintaining connection to the channel 1 (packet switching network) (Step S68). Then, the main CPU 111 accesses the MSS server 17 via the channel 2 (channel switching network) using URL for the MSS content provided by the meta file and receives the MSS content from the channel 2 (channel switching network) to display the content on a display (Step S67).

As described above, if the mobile station is located in such an electric field intensity environment that it is possible to use a multi-call function, it becomes unnecessary to disconnect the channel 1 by newly connecting the mobile station to the channel 2 while maintaining its connection to the presently using channel 1. This enables reduction of time required for obtaining content by newly connecting the mobile station to the channel 2. Also, it is possible to promptly obtain the content by using the original channel 1 to which its connection is currently maintained if content to be obtained is switched again from multi-media data to text-based data.

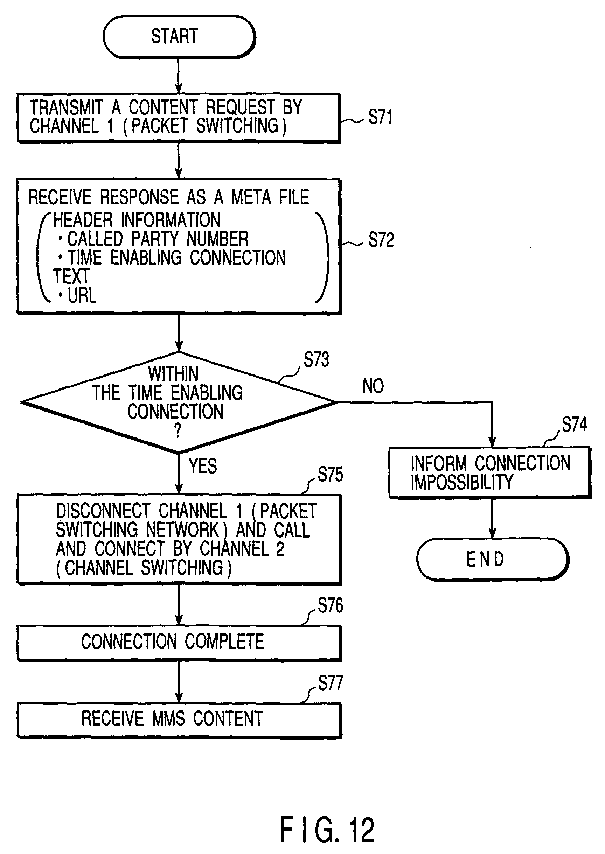

A flowchart shown in FIG 12 is an example in which the useless channel switching can be eliminated by making use of validity term of the content.

The main CPU 111 of the mobile station 11 firstly transmits a request for the intended content to the information providing server 15 via the presently using channel 1 (packet switching network) (Step S71) and receives a meta file as a response (Step S72). The meta file includes the information on validity term of the content and time for enabling connection in addition to the called party number and URL for the content for which a request has been made. The time for enabling connection varies depending on the type of content such as the MMS content changing with the elapse of time and MSS content where the broadcasting time for a TV program has been determined.

The main CPU 111 judges whether or not the present time or time elapsed since a request for the content has been made is within the time enabling connection designated by the meta file (Step S74). For example, if a call is arrived at the mobile station 11 after a request for the content has been made or if the mobile station 11 is beyond the time for enabling connection by moving the mobile station 11 to the environments such as a tunnel and the like where communication cannot be conducted, the main CPU 111 informs users of its disconnection (Step S74) and does not conduct connection any more.

While, if the present time or time elapsed since a request for the content has been made is within the time for enabling connection designated by the meta file, the main CPU 111 carries out calling and connection to the channel 2 (channel switching network) using the called party number designated by the meta file after disconnecting the channel 1 (packet switching network) (Step S75). If the connection is complete, the main CPU 111 accesses the MSS server 17 via the channel 2 (channel switching network) using URL for the MSS content provided by the meta file and receives the MSS content from the channel 2 (channel switching network) to display the content on a display (Step S76 and Step S77).

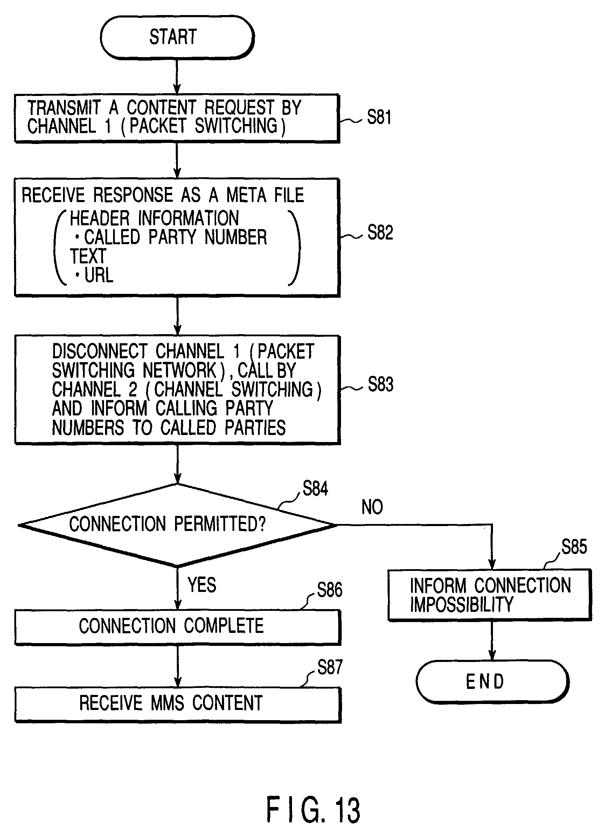

A flowchart shown in FIG. 13 is an example in which a new connection is restricted at the server side by a calling party number of a mobile station.

The main CPU 111 of the mobile station 11 firstly transmits a request for the intended content to the information providing server 15 via the presently using channel 1 (packet switching network) (Step S81) and receives a meta file as a response (Step S82). The meta file includes the called party numbers and URL for the content for which a request has been made. Also, the information providing server 15 informs the MMS server 17 of the calling party number of the mobile station 11 for which a request has been made and advises the MMS server 17 of the access to be made from the mobile station 11. This registers a calling party number of the mobile station 11 in the MMS server 17 or the access point thereto as a user ID enabling access.

Then, the main CPU 111 calls the channel 2 (channel switching network) and advises the calling party number to a server to be accessed using the called party number designated by the meta file (Step S83). At the server side, it is judged whether or not PPP connection using the called party number is permitted. If the connection to the MMS server 17 is permitted and completed without trouble (Step S84 and Step S86), the main CPU 111 accesses the MMS server 17 via the channel 2 (channel switching network) using URL for the MMS content provided by the meta file and receives the MMS content from the channel 2 (channel switching network) to display the content on a display (Step S87). On the other hand, if the connection is not permitted and the connection is not completed with trouble though permitted, the main CPU 111 advises the user of the fact and completes the processing (Step S85). It is thus possible to efficiently provide the MSS content to users through an independent channel without causing wrong access from other users by restricting connection by queuing between a server and mobile station. However, it is also possible to restrict utilization of content by transmitting the information indicating sub-addresses from calling party, server performance and the like in stead of calling party numbers.

### (Response header extension method)

Next, a response header extension method will be described. The response header extension method is a method which instructs channel switching by the predetermined extension status code formed by extending a status code contained in a response which is returned from a server responsive to the content request from a mobile station. Unlike a meta file method, a resource (URL) of the MMS content is directly described in an HTML file constituting information content.

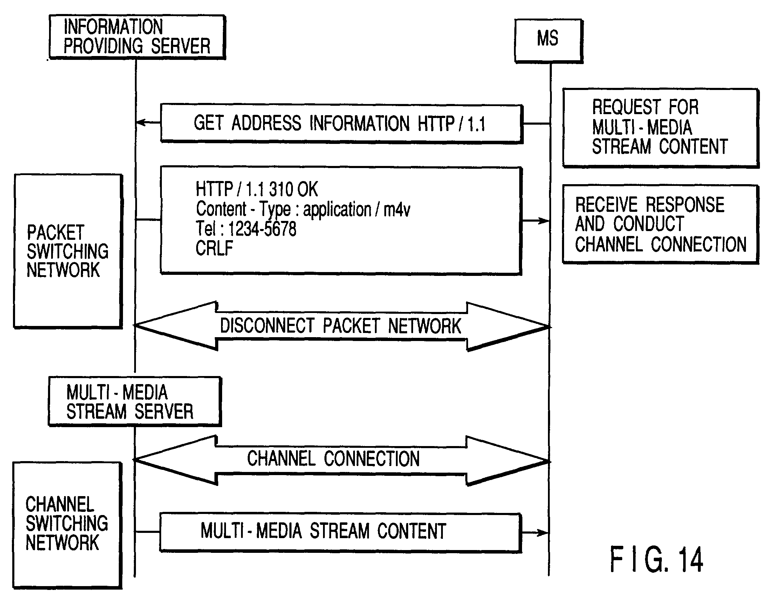

FIG. 14 shows a content acquisition procedure by a response header extension method.
(1) The mobile station 11 transmits a request for the intended MMS content to the information providing server 15 via the packet switching network by using address information (URL) to the meta file incorporated in the HTML file.
   GET Address information HTTP/1.1
(2) The mobile station 11 receives a meta file as a response via the packet switching network 13. Generally, the content transmission from the server is started from this point of time, but content is not instantly transmitted since the MSS content is transmitted by channel switching in this embodiment. In stead, the content is transmitted to the mobile station with the extension status code to instruct reconnection by the channel switching included in the HTTP response header.
   HTTP/1.1 310 OK

   The status code 310 is newly established in this embodiment. This is to be used as the extension status code. Also, "Content-Type: application/m4v2" is a type of the content for which a request has been made and "Tel: 1234-5678" is a called party number.
(3) The mobile station 11 disconnects the packet switching network 13 and connects to the channel switching network 14 using a called party number and then, receives the MSS content via the channel switching network 14 by accessing the MMS server using URL incorporated in the HTML file.

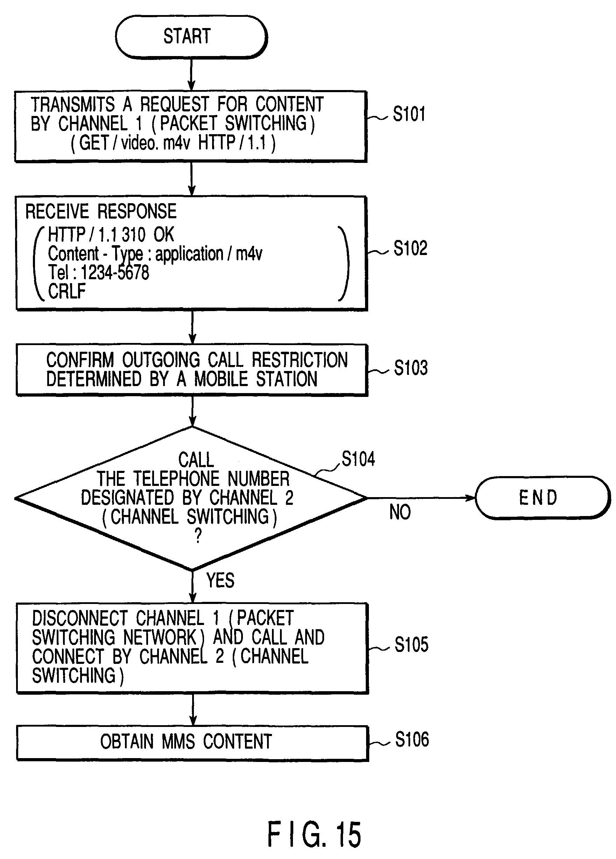

However, the response header method does not necessarily require designation of called party number. It is possible to call access point for network connection through channel switching connection by registering in advance a called party number for channel switching connection in the mobile station 11. Also, various types of controls described referring to FIGS. 6 to 13 can be conducted in the same manner as in the meta file method. An example of restriction by the called party number will be described using a flowchart in FIG. 15.

That is, the main CPU 111 of the mobile station 11 firstly transmits a request for the intended content to the information providing server 15 via the presently using channel 1 (packet switching network) (Step S101) and receives a response (Step S102). As described above, this response header includes the extension status code 310, the content type for which a request has been made and called party numbers.

Once the main CPU 111 has recognized the need for reconnection by channel switching connection using the extension status code 310, a user of the mobile station 11 checks the registered outgoing call restriction regulation information with the called party number and judges whether or not to carry out automatic calling for connection to a new channel 2 (channel switching network) designated by the called party number (Step S103 and Step S104).

The outgoing call restriction items to be restricted by the outgoing call restriction regulation information are user identification information to determine whether or not it is always necessary to indicate and identify a called party number to an user in addition to the outgoing call inhibiting area code information designating inhibition of the outgoing call to an area code and outgoing call inhibiting chargeable channel information which inhibits outgoing call to chargeable channels such as the international telephone service, Dial Q2 and the like. If a called party number is applied to the number restricted by the outgoing call inhibiting area code information or outgoing call inhibiting chargeable channel information, the connection to a new channel 2 (channel switching network) designated by the called party number is stopped. Also, if the user identification information is valid, a called party number is indicated to a user to inquire whether or not to make connection even if the called party number is not applied to the number restricted by the outgoing call inhibiting area code information or outgoing call inhibiting chargeable channel information.

If a called party number is not applicable to the number restricted by the outgoing call inhibiting area code information or the outgoing call inhibiting chargeable channel information, or if a calling is permitted by a user, the main CPU 111 carries out calling and connection to the channel 2 (channel switching network) using the called party number after controlling the communication control section 112 to disconnect a channel 1 (packet switching network) (Step S15). Then, the main CPU 111 accesses the MMS server 17 via the channel 2 (channel switching network) using URL for the MMS content and receives the MMS content from the channel 2 (channel switching network) to display the content on a display thereafter.

### (Scheme extension method)

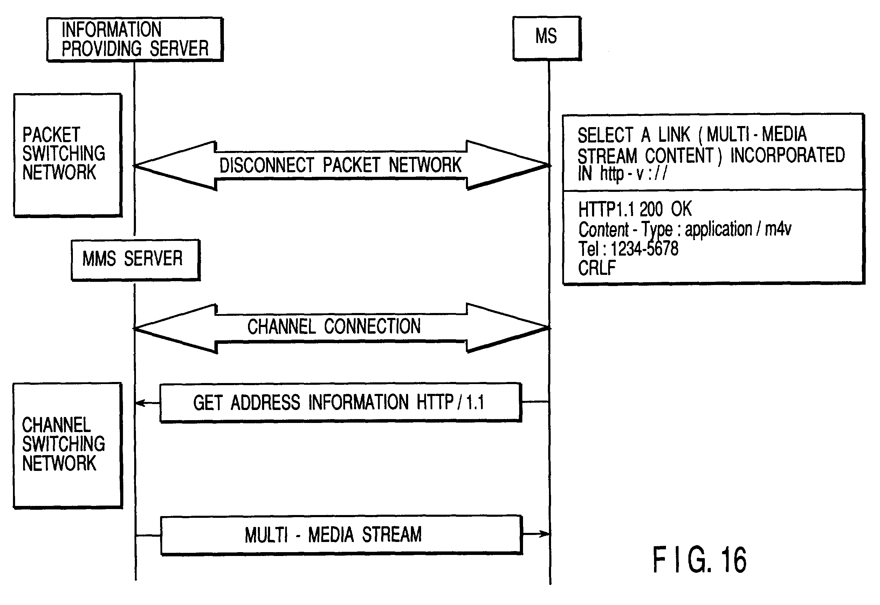

Next, a scheme extension method will be described referring to FIG. 16.

The scheme extension method is a method to provide a mobile station with indication that it is necessary to conduct reconnection of channel switching by the predetermined extension scheme name having extended the scheme name of the content information to which the mobile station is linked and which is incorporated in the content obtained from a server. That is, before a request is transmitted by the mobile station 11 in order that the MMS content is confirmed by only the description (URL) of the resource, a scheme with usual description of "http" is replaced by the description, e.g. "http-v" which is newly provided for the exclusive use of the scheme. That is, URL for referring to the content to which the mobile station is linked will be described:

For example, the usual description is:
A HREF="http:// server/index.html〉index〈/A〉
but linking to the MMS content (multimedia.m4v) is described below is:
〈A HREF="http-v://server/multimedia.m4v〉multimedia〈/A〉.

The mobile station 11 uses channel switching when receiving the content described with the scheme of "http-v". A method of transmitting a request has two types either of which can be adopted.
(1) Conduct channel switching connection after making a request by a packet switching network.
(2) Make a request using a channel switching network after conducting channel switching connection. FIG. 16 is an example applicable to the method in (1) above.

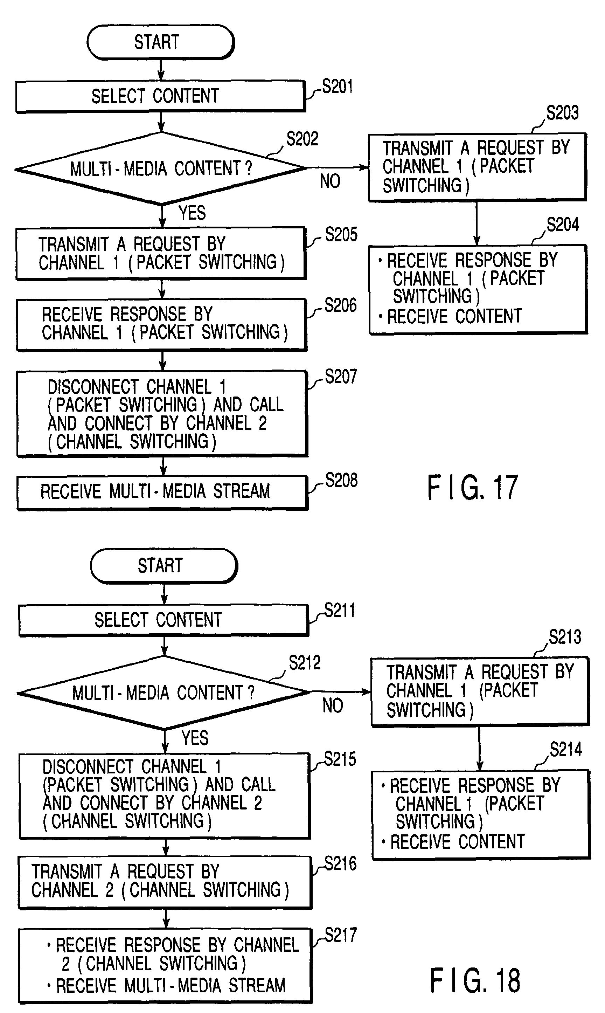

Next, processing procedures in each of methods (1) and (2) will be described in reference to flowcharts shown in FIGS. 17 and 18.

A flowchart in FIG. 17 is for the method in (1) above.

A browser of the mobile station 11 judges whether or not the selected content is a MMS content depending on the type of a scheme (http-v or not) once URL is selected (Step S201) from the information content received via the channel 1 (channel switching network) (Step S202).

If the scheme is the one other than http-v, the selected content is not the MMS content. The mobile station 11 thus transmits a request as usual via the channel 1 (packet switching network) (Step S203) and receives a response and content via the channel 1 (packet switching network) (Step S204).

On the other hand, if the scheme is http-v, the selected content is the MMS content. The mobile station 11 thus transmits a request via the channel 1 (packet switching network) and receives a response (Step S205 and Step S206). Thereafter, the mobile station 11 disconnects the channel 1 (packet switching network) and carries out calling and connection to the channel 2 (channel switching network) using a called party number (Step S207). Then, the mobile station 11 receives the MMS content via the channel 2 (channel switching network) (Step S208).

A flowchart shown in FIG. 18 is for the method in (2) above.

A browser of the mobile station 11 judges whether or not the selected content is a MMS content depending on the type of a scheme (http-v or not) once URL is selected (Step S211) from the information content received via the channel 1 (channel switching network) (Step S212).

If the scheme is the one other than http-v, the selected content is not the MMS content. The mobile station 11 thus transmits a request as usual via the channel 1 (packet switching network) (Step S213) and receives a response and content via the channel 1 (packet switching network) (Step S214).

On the other hand, if the scheme is http-v, the selected content is the MMS content. The mobile station 11 thus disconnects the channel 1 (packet switching network) and carries out calling and connection to the channel 2 (channel switching network) using called party numbers (Step S215). Thereafter, the mobile station 11 transmits a request via the channel 2 (channel switching network) (Step S216) and receives a response and content via the channel 2 (channel switching network) (Step S217).

Various types of control processes described referring to FIGS. 6 to 13 can be applied to the scheme extension method similarly to the meta file method.

As described above, it is possible to efficiently and stably obtain different types of contents from a network by dynamically switching channels and channel connections to be used depending on the content in the present embodiment.

However, an example in which channel switching is conducted between a packet switching network and channel switching network has been described in the aforementioned embodiment, but the packet switching network can be switched in response to the content in a system wherein more than two packet switching services are provided. That is, a first and second packet switching services can be switched according to the content. There are two types of packet communications in the packet communication system. One type of the packet communication is so called a best effort type, in which a quality of service (QoS) is not guaranteed in the packet communication and the another type of the packet communication is a QoS guaranteed type, in which a quality of service (QoS) is guaranteed in the packet communication. In respect of an efficiency of utilizing the network, it is preferable to use the best effort type in which a quality of service (QoS) is not guaranteed. However, it is preferable to use the QoS guaranteed type in which a quality of service (Qos) is guaranteed, when the stream data such as the multimedia stream data or content is requested and transferred. Thus, it is possible to provide a best mode service with dynamically switching the best effort type to the QoS guaranteed type of packet communication when the multi-media stream content is requested under a condition of acquiring information content with the ordinal type of packet communication.

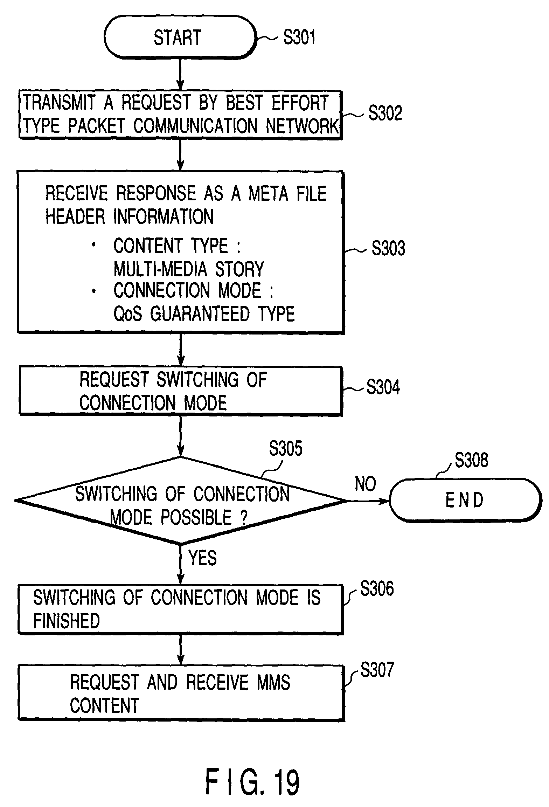

An embodiment in which the best effort type of packet communication is switched to the QoS guaranteed type of packet communication when the multi-media stream content is requested under the condition of acquiring information content with the ordinal type of packet communication will be described with reference to FIG. 19.

FIG. 19 shows a content acquisition procedure of switching the best effort type packet communication to the QoS guaranteed type communication. When this content acquisition procedure is started, the mobile station 11 transmits a request for the intended MMS content to the information providing server 15 via the packet switching network (steps 301 and 302). The information providing sever 15 transmits a meta file as a response(step 303). The meta file includes content information indicating the multimedia data stream and connection mode information of indicating that the QoS guaranteed type communication is required. The mobile station 11 requests the communication control section as a communication bearer in response to the content information and the connection mode information (304). If the request is not permitted, the connection mode is maintained and content acquisition procedure is finessed. If the request is permitted, the connection mode is switched, i.e., the QoS guaranteed type communication is switched to the best effort type communication (305). If the connection mode can be switched (306), the switching mode is switched so that the mobile station 11 is started to communicate with the information providing sever 15 via the QoS guaranteed type communication and receive the multi media stream data (307).

In this embodiment, the connection mode is automatically switched in accordance with the meta file. However, a user or client may switch the connection mode in accordance with the meta file.

In this embodiment, the description has been made on the assumption that the information providing server 15 or the MMS server 17 receives a request for calling from the mobile station 11 and that each server transmits the information content and MMS content to the mobile station 11. For example, not only content is not transmitted after having the information providing server 15 and the MMS server 17 provided with a function to call the mobile station 11 and after receiving a call from the mobile station 11 but calling from a server to the mobile station 11 and the content transmission to the mobile station 11 may be conducted from and by the server.

However, an example in which the information content and the MMS content are provided from another server has been described, but it is important to switch channels or channel connections to be used according to the information content and the MMS content. It is of course possible to receive the information content and MSS content from the same server.

Also, since a called party number may be used for connection to a server, the number may be for not only the number to be an access point to the server but also the number for PPP-connection to the server by direct dialing.

Furthermore, it raises of course no problem even if moving picture is based on a coding method other than the MPEG-4 Standard and an application of the present invention is not limited to the moving picture. In addition, it does not matter whether connection to the mobile station and server is by radio or wireless. Neither does it matter whether type of channel is of PDC or CDMA 200.

As described above, it is possible to efficiently and stably obtain different types of contents from a network with the reduction of communication cost by switching channels or connections to the channels based on the content according to the present invention. More particularly, the present invention can achieve the content providing services suitable for a mobile station.

## Claims

1. A data communicating for transmitting or receiving first and second content data via a first and second network (13, 14) characterized comprising:
first control means (111, 112) for connecting to the first network (13) and transmitting a request for transmitting the second content data via the first network (13) and;
second control means (111, 112) for switching from the first network (13) to the second network (14) in response to the request from the first network (13) and receiving the second content data via the second network (14).

2. The data communicating terminal according to claim 1, characterized in that the first content data includes text data and the second content data includes audio stream data or video stream data.

3. The data communicating terminal according to claim 1, characterized in that the first network (13) is a packet switching network (13) connecting to the data communicating terminal (12) in a packet switching connection mode and the second network (14) is a channel switching network (14) to which the data communicating terminal (12) can be connected in a channel switching connection mode and wherein the second control means (14) switches the packet switching connection mode to the channel switching connection mode based on response from the first network (13).

4. The data communicating terminal according to claim 1, characterized in that the response from the first network (13) include called party numbers required for connection to the second network (14) and the second control means (111, 112) includes restricting means to restrict the calling based on the called party numbers.

5. The data communicating terminal according to claim 4, characterized in that the response from the first network (13) include a plurality of called party numbers required for connection to the second network (14) and the restricting means indicates called party numbers and makes an user to select a called party number for the calling.

6. The data communicating terminal according to claim 1, characterized in that the first network (13) is provided with a server (25, 27) to provide first content including hyper media information and response from the first network (13) correspond to called party numbers which are required for connection to the second network (14) included in the hyper media information, and the second control means (111, 112) includes restricting means to restrict the calling based on the called party numbers.

7. The data communicating terminal according to claim 1, characterized in that the first network (13) is provided with a first server (15) to provide a first content including hyper media information, and channels connected to the first server (15);
the second network (14) is provided with a second server (17) to provide second content including audio stream data or video stream data, and channels connected to the second server (17);
the hyper media information designates a channel of the second network (14) to obtain the intended second content and includes the connection information to establish connection mode to the channel; and
the second control means (111, 112) is provided with switching means to switch channels for connection to the second network (14) or the connection modes to the channel based on the connection information.

8. The data communicating terminal according to claim 7, characterized in that the connection information includes identification numbers for access points to the second server on the second network (14) having the intended content or the information to indicate type of channel connection mode to be used for obtaining the intended content.

9. The data communicating terminal according to claim 7, characterized in that the connection information is provided by header information in an intermediate file transmitted from a server on the first network (13) responsive to the request for the content to indicate the first content location for which the data communicating terminal (12) has made a request.

10. The data communicating terminal according to claim 7, characterized in that the connection information is provided by an extension status code obtained by extending a status code contained in response which are returned from a server (15, 17) on the first network (13) responsive to the content request from the data communicating terminal (12).

11. The data communicating terminal according to claim 7, characterized in that the connection information is provided by a predetermined extension scheme obtained by extending a scheme for the content information incorporated in the content obtained from a server of the network to which a data communicating terminal (12) is linked.

12. The data communicating terminal according to claim 1, characterized in that the second control means (111, 112) carries out switching from the first network (13) to the second network (14) based on the instruction of a user.

13. The data communicating terminal according to claim 1, characterized in that the second control means (111, 112) is further provided with switching means for switching from the first network (13) to the second network (14) based on the data size of the second intended content.

14. The data communicating terminal according to claim 1, characterized in that the data communicating terminal (12) has a establishing means for establishing a plurality of calls via the first and second network (14) s and
the establishing means establishes a connection to channels of the second network (14) with maintaining connection to the channels of the presently using first network (13).

15. The data communicating terminal according to claim 14, characterized in that the second control means (111, 112) includes means to enable connection to channels of the second network (14) after disconnecting the presently using channels.

16. The data communicating terminal according to claim 1, characterized in that the first network (13) is provided with the first server (15) to provide the first content, and channels connected to the first server (15);
the second network (14) is provided with the second server (17) to provide the second content including audio stream data or video stream data, and channels connected to the second server (17);
the first content includes the information related to validity term capable of obtaining the intended second content from a server (15, 17) on the second network (14); and
the second control means (111, 112) is provided with means which judges whether or not the present access is within the validity term based on the validity term information and which inhibits calling to obtain the intended content when the access is out of the validity term.

17. The data communicating terminal according to claim 1, characterized in that the first network (13) is provided with the first server (15) to provide the first content, and channels connected to the first server (15);
the second network (14) is provided with the second server (17) to provide the second content including audio stream data or video stream data, or channels connected to the second server (17); and
the second control means (111, 112) includes means which carries out the calling to inform receivers of the information contained in the data communicating terminal (12) concerned and which makes a server (15, 17) on the second network (14) to judge whether or not the data communicating terminal (12) connected to the channel of the second network (14) is an authorized data communicating terminal (12) at which the second content can be received.

18. A communication system characterized by comprising:
a first network (13) which includes a first server (15) to provide a first content and channels connected to the first server (15);
a second network (14) which includes a second server (17) to provide a second content containing audio stream data or video stream data, or channels connected to the second server (17); and
a data communicating terminal (12) capable of obtaining the first and second content data via the first and second networks (13, 14)
characterized in that the data communicating terminal (12) is provided with;
first control means (111, 112) for connecting to the first network (13) and transmitting a request for transmitting the second content data via the first network (13), and
second control means (111, 112) for switching a connection from the first network (13) to second network (14) responsive to the request from the first network (13) and receiving the second content data via the second network (14).
